# EUROPEAN PATENT APPLICATION

(11) **EP 4 597 221 A1**
(43) Date of publication of application: **06.08.2025**
(21) Application number: 25154904.4
(22) Date of filing: 30.01.2025
(51) Int. Cl.: G03B 21/54, F16M 11/42, A45C 5/14, A45C 13/26, G03B 21/14

(54) **PROJECTION SYSTEM, PROJECTOR CART, AND METHOD OF INSTALLING PROJECTION SYSTEM**

(30) Priority: 31.01.2024 JP 2024012628
(71) Applicant: Seiko Epson Corporation, Tokyo 160-8801 (JP)
(72) Inventor: FUJIKAWA, Yoichi, Suwa-shi, 392-8502 (JP)
(74) Representative: Lewis Silkin LLP

(57) **Abstract**

A projection system includes a projector, and a projector cart configured to house the projector, in which the projector includes an enclosure, a light source housed in the enclosure, a light modulator housed in the enclosure and configured to modulate light emitted from the light source, a projection lens unit configured to emit the light modulated by the light modulator to an outside of the enclosure, and a power supply substrate housed in the enclosure and configured to supply power to the light source, and in a state in which the projector is in use, the projector cart includes a housing which is configured to house the projector and is configured to emit the light emitted from the projection lens unit to an outside of the projector cart, wheels placed vertically below the housing, and a first operator which is located vertically above the housing and is configured to change an electrical state of the power supply substrate.

## Description

The present application is based on, and claims priority from JP Application Serial Number 2024-012628, filed January 31, 2024, the disclosure of which is hereby incorporated by reference herein in its entirety.

### BACKGROUND

### 1. Technical Field

The present disclosure relates to a projection system, a projector cart, and a method of installing a projection system.

### 2. Related Art

In the past, a projector that projects projection light onto a screen or the like to thereby display an image has been known. A rack for a projector which is capable of improving convenience even when moving the projector has been known (see, e.g., JP-A-2012-098644).

JP-A-2012-098644 is an example of the related art.

There is a problem that position adjustment is difficult when projection mapping is performed using a plurality of projectors.

### SUMMARY

A projection system according to the present disclosure includes a projector, and a projector cart configured to house the projector, in which the projector includes an enclosure, a light source housed in the enclosure, a light modulator housed in the enclosure and configured to modulate light emitted from the light source, a projection lens unit configured to emit the light modulated by the light modulator to an outside of the enclosure, and a power supply substrate housed in the enclosure and configured to supply power to the light source, and in a state in which the projector is in use, the projector cart includes a housing which is configured to house the projector and is configured to emit the light emitted from the projection lens unit to an outside of the projector cart, wheels placed vertically below the housing, and a first operator which is located vertically above the housing and is configured to change an electrical state of the power supply substrate.

A projector cart according to the present disclosure is a projector cart configured to house a projector and move, the projector cart including a housing configured to house the projector, wheels provided to the housing, and a first operator configured to change an electrical state of the projector, in which the first operator is located above the housing in a vertical direction in a use state.

A method for installing a projection system according to the present disclosure is a method for installing a projection system including a projector, a housing configured to house the projector, wheels provided to the housing, a gripper provided to the housing, and an operator provided to the gripper and configured to change an electrical state of the projector, the method including grasping the gripper to move the wheels, turning ON power of the projector by operating the operator after moving the wheels, and grasping the gripper to adjust a position of the projection system after turning ON the power of the projector.

### BRIEF DESCRIPTION OF THE DRAWINGS

FIG. 1 is a left-front perspective view of a projection system according to Embodiment 1.
FIG. 2 is a right-rear perspective view of the projection system according to Embodiment 1.
FIG. 3 is a right-rear perspective view of the projection system according to Embodiment 1 when retracting a gripper.
FIG. 4 is a front view of the projection system according to Embodiment 1.
FIG. 5 is a right-rear perspective view of a projection system according to Embodiment 2.
FIG. 6 is a right-rear perspective view of the projection system according to Embodiment 2 when retracting grippers.
FIG. 7 is a right-rear perspective view of a projection system according to Embodiment 3.

### DESCRIPTION OF EMBODIMENTS

Hereinafter, some embodiments of the present disclosure will be described with reference to the drawings. Reference character FR illustrated in each of the drawings represents front (a front direction) of a projection system 1 in an installed state, reference character UP represents above the projection system 1, and reference character RH represent right hand of the projection system 1. Although not illustrated, a direction opposite to the reference character FR represents rear of the projection system 1, a direction opposite to the reference character UP represents below the projection system 1, and a direction opposite to the reference character RH represents left hand of the projection system 1. Note that in the description, the directions of front, rear, right, left, up, and down are the same as the directions with respect to the projection system 1 described above unless otherwise described.

### Embodiment 1

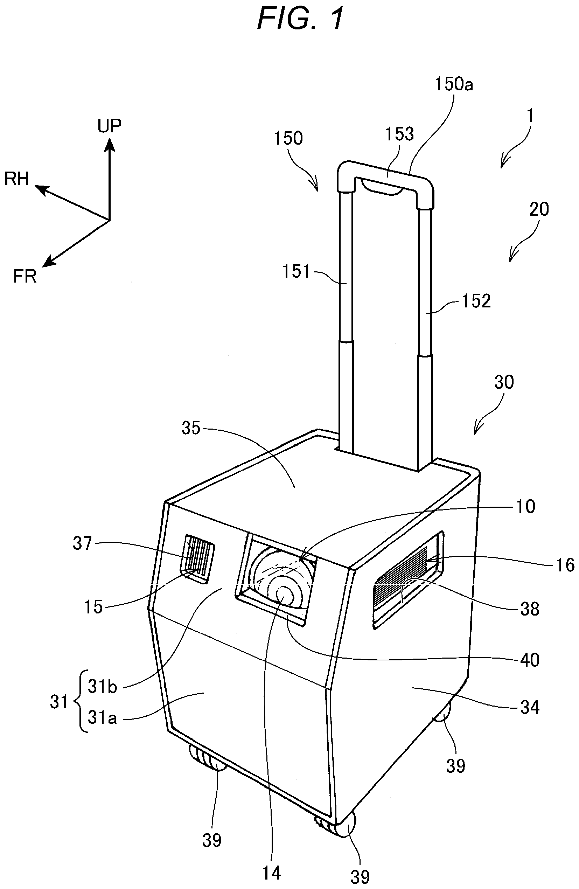

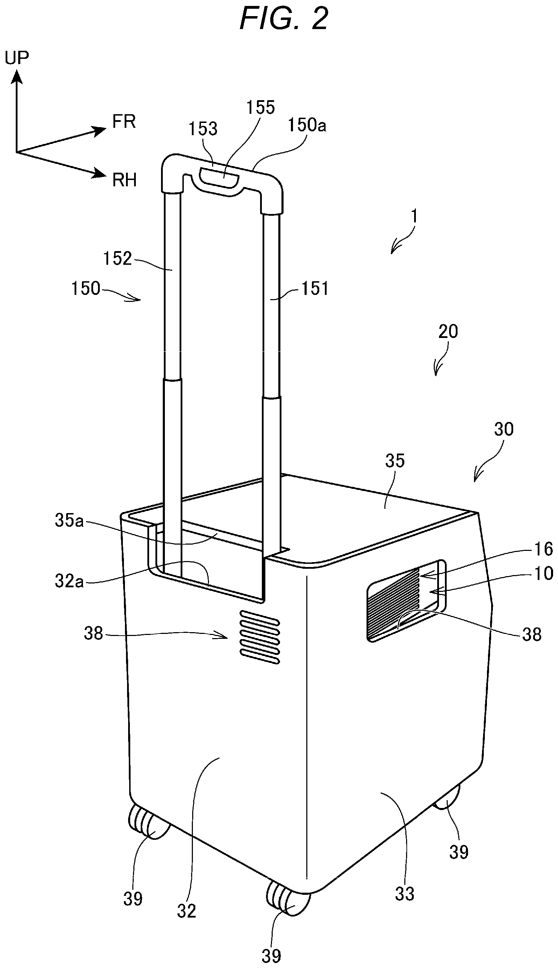

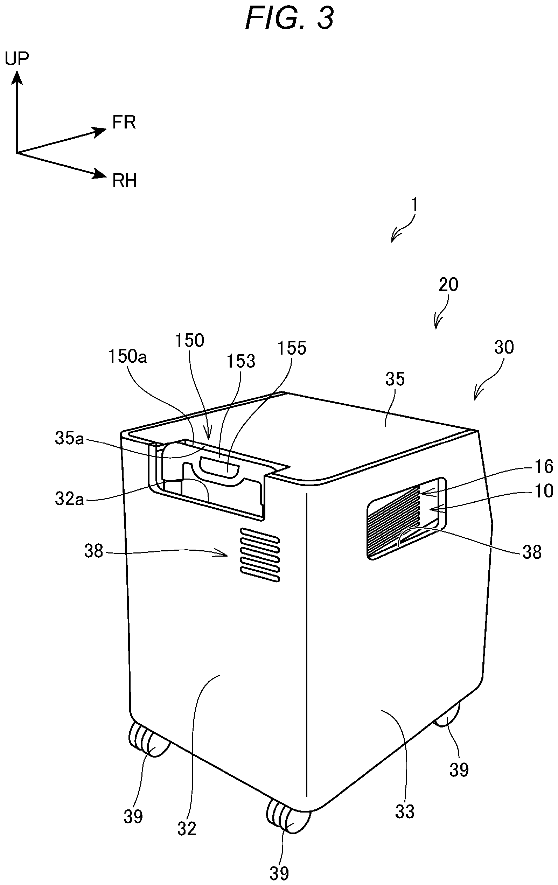

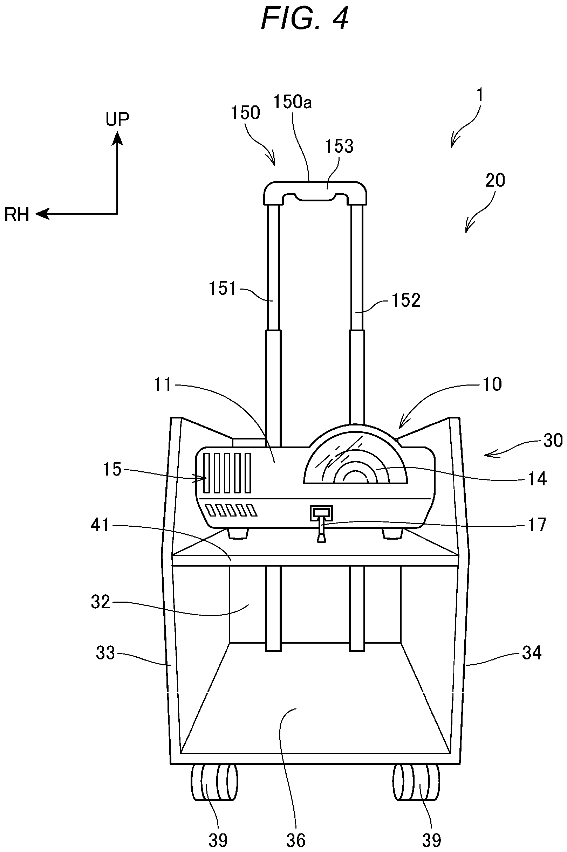

FIG. 1 is a left-front perspective view of the projection system 1. FIG. 2 is a right-rear perspective view of the projection system 1. FIG. 3 is a right-rear perspective view of the projection system 1 when retracting a gripper 150. FIG. 4 is a front view of the projection system 1.

The projection system 1 includes a projector 10 that projects an image, and a projector cart 20 that houses the projector 10.

The projector 10 includes an enclosure 11, a light source, a light modulator, a projection lens unit 14, and a power supply substrate.

When the projector 10 is powered ON, the power is supplied to the light source from the power supply substrate. The light emitted from the light source is incident on the light modulator. The light modulator modulates the light emitted from the light source. The light modulated by the light modulator is emitted to the outside of the enclosure 11 by the projection lens unit 14, and an image can be projected onto a projection surface.

The enclosure 11 of the projector 10 is provided with an inlet 15 for air intake and a heat exhaust port 16 for heat rejection. Further, a leg 17 which makes it possible to adjust the projection surface in a vertical direction is provided to a lower portion of the enclosure 11 of the projector 10.

The projector cart 20 houses the projector 10, and it is possible to move the projector cart 20. Examples of the movement of the projector cart 20 include movement by human power and movement by a robot.

As illustrated in FIG. 4, the projector cart 20 includes a housing 30 having a substantially rectangular solid shape. The projector 10 is housed in the housing 30.

The housing 30 includes an upper surface (a fifth surface) 35 forming a top surface, a right surface (a third surface) 33 and a left surface (a fourth surface) 34 forming the right and the left thereof, a front surface (a first surface) 31 and a rear surface (a second surface) 32 forming the front and the rear thereof, and a lower surface (a sixth surface) 36 forming a bottom surface. Note that each of the surfaces of the housing 30 may be formed of a plurality of surfaces. In the present embodiment, the front surface 31 includes a vertical surface 31a with respect to a horizontal floor and an inclined surface 31b crossing the vertical surface 31a. The upper surface 35 is placed substantially parallel to the horizontal floor. By providing the horizontal surface in this way, it is possible to provide a stand for an electronic apparatus and so on to be coupled to the projector 10 housed in the housing 30.

An intake hole 37 is formed at the front surface of the housing 30. Heat exhaust holes 38 are formed at the right surface 33 and the rear surface 32 of the housing 30. The intake hole 37 and the heat exhaust holes 38 are placed at positions that do not interfere with the intake and the heat rejection of the projector 10 placed inside the projector cart 20. Further, the intake hole 37 and the heat exhaust holes 38 may be formed of a plurality of slit holes. This makes it possible to prevent the temperature in the housing 30 from rising due to the heat exhaust air from the projector 10 even when the projector 10 is placed in the housing 30. That is, since the projector 10 is capable of discharging the heat exhaust air to the outside of the housing 30 of the projector cart 20, it is possible to prevent the heat exhaust air of the projector 10 from being retained in the housing 30, and to perform an intake operation and a heat exhaust operation without raising the temperature in the housing 30.

Wheels 39 are placed at the lower surface 36 of the housing 30. The wheels 39 are respectively placed at four corners of the lower surface 36. The wheels 39 are provided with stoppers, and the stoppers are capable of regulating rotations of the wheels 39.

A window 40 for emitting the projection light from the projector 10 to the outside of the housing 30 is provided to at least one of the upper surface 35 and the front surface 31 of the housing 30. The window 40 is placed so as not to block the projection light from the projector 10. The window 40 may be formed by removing the upper surface 35 and the front surface 31. That is, the upper surface 35 and the front surface 31 of the housing 30 may be formed in a removable manner, and it is possible to use the projection system 1 in the state in which the upper surface 35 and the front surface 31 are removed.

In the present embodiment, the housing 30 is provided with a divider 41 to divide the housing 30 into an upper space and a lower space. In this way, the housing 30 may be divided into a plurality of spaces. By dividing the housing 30 into a plurality of spaces, the installation height of the projector 10 can be loosely adjusted in accordance with the position of the projection lens unit 14 of the projector 10 and the position projected from the projector 10. Further, the space below the divider 41 may be a storage place of a related component such as a machine other than the projector 10 or a cable to be used for wiring.

The housing 30 is provided with the gripper 150 which functions as a handle when moving the projector cart 20. The gripper 150 is placed at a rear end of the housing 30. In the present embodiment, the gripper 150 includes a first support rod 151 and a second support rod 152 which extend in the vertical direction, and a coupling 153 which couples upper ends of the first support rod 151 and the second support rod 152 to each other. That is, the gripper 150 is formed to have an inverted U-shape in a front view.

The coupling 153 of the gripper 150 is provided with an operation panel (a first operator) 155. The operation panel 155 is a touch display, and can perform an operation such as a power supply operation or a keystone correction of the projector 10 by the user touching an icon displayed on the touch display.

The gripper 150 is displaceable, and is formed so as to be retracted inside the housing 30 through the upper surface 35. Examples of the displacement configuration for retracting the gripper 150 in the housing 30 include a stretchable structure and a folded structure. Further, the gripper 150 can be freely changed in length by being exposed from the housing 30. That is, in the present disclosure, a retracted state includes not only a state in which a whole of the gripper 150 is retracted inside the housing 30, but also a state in which a part of the gripper 150 is retracted inside the housing 30 and a part thereof is exposed outside the housing 30.

The gripper 150 is formed such that a length from the upper surface 35 of the housing 30 to the operation panel 155 is longer than a length from the lower surface 36 to the upper surface 35 when the gripper 150 extends to the maximum. By providing the operation panel 155 to the gripper 150 in this way, it is not necessary to take out the projector 10 from the housing 30 in order to change the setting of the projector 10, and the projector cart 20 can be moved in a standing posture.

The gripper 150 can be contracted to a state in which the uppermost end 150a of the gripper 150 is located at a position equivalent to or lower than the upper surface 35 of the housing 30.

A cutout 35a for retracting the coupling 153 is placed at the rear end of the upper surface 35 of the housing 30. Further, a cutout 32a is also placed at the upper end of the rear surface 32 so that a part of the gripper 150 retracted therein is exposed to an outer of the housing 30. In a state in which the gripper 150 is retracted in the housing 30, due to the cutouts 32a, 35a, a gap can be formed around the coupling 153 of the gripper 150, and the operator can grasp the gripper 150 to take it out. Further, when retracting the gripper 150, the operation panel 155 is exposed to the outer surface. That is, the operation panel 155 is located outside the housing 30, and it is possible for the user to operate the projector 10 with the operation panel 155 even when the gripper 150 is retracted.

The housing 30 is provided with a cable (not shown) for supplying power to the projector 10 and a wiring hole (not shown) for wiring the cable.

A part of each of the first support rod 151, the second support rod 152, and the coupling 153 has a hollow structure at least a part of which is hollow. A circuit to be controlled by an operation on the operation panel 155 is placed in the internal hollow. The circuit extends to the housing 30 and is coupled to the projector 10.

The installation of the projection system 1 is broadly divided into three steps. The first step is a step of grasping the gripper 150 of the projection system 1 to move the wheels 39. This step can loosely determine the position of the projection system 1. The second step is a step of turning ON the power of the projector 10 installed in the projection system 1 by operating the first operator 155 provided to the gripper 150. The third step is a step of grasping the gripper 150 to perform a fine position adjustment of the projection system 1. These steps make it possible for the projection system 1 to easily perform the position adjustment.

### Advantages of Embodiment 1

As described hereinabove, according to Embodiment 1 of the present disclosure, the projector 10 and the projector cart 20 for housing the projector 10 are provided, the projector 10 includes the enclosure 11, the light source housed in the enclosure 11, the light modulator housed in the enclosure 11 and configured to modulate the light emitted from the light source, the projection lens unit 14 configured to emit the light modulated by the light modulator to the outside of the enclosure 11, and the power supply substrate housed in the enclosure 11 and configured to supply power to the light source, and in a state in which the projector 10 is in use, the projector cart 20 includes the housing 30 which is capable of housing the projector 10, and is capable of emitting the light emitted from the projection lens unit 14 to the outside of the projector cart 20, the wheels 39 placed vertically below the housing 30, and the operation panel 155 which is located vertically above the housing 30, and changes the electrical state of the power supply substrate.

Accordingly, since it becomes easy for the operator to operate the projector 10 in the standing posture, the operability of the projection system 1 and the projector cart 20 can be improved.

The projector cart 20 includes the gripper 150 provided to the housing 30, the gripper 150 is located above the housing 30 in the vertical direction, and the operation panel 155 is provided to the gripper 150.

Accordingly, it is possible to perform the movement of the projection system 1 and the operation of the projector 10 by using the gripper 150, and it becomes easy for the operator to operate the projector 10 in the standing posture, and therefore, it is possible to improve the operability of the projection system 1.

The operation panel 155 can operate powering ON and OFF of the projector 10.

Accordingly, since the power supply operation of the projector 10 can be performed by using the gripper 150, the operability of the projection system 1 is improved.

The operation panel 155 can make the projector 10 execute the keystone correction of the image projected by the projector 10.

Accordingly, since the keystone correction operation of the projector 10 can be performed by using the gripper 150, the operability of the projection system 1 is improved.

The gripper 150 is placed so that at least a part of the gripper 150 can be retracted to a position equivalent to or lower than the upper surface of the housing 30 in the use state, and in the state in which the gripper 150 is retracted, the operation panel 155 faces outside the housing 30.

Accordingly, since the user can operate the operation panel 155 while retracting the gripper 150, the operability of the projection system 1 is improved.

The housing 30 includes the front surface 31, the rear surface 32 opposed to the front surface 31, the right surface 33 crossing the front surface 31 and the rear surface 32, the left surface 34 opposed to the right surface 33 and crossing the front surface 31 and the rear surface 32, the upper surface 35 crossing the front surface 31, the rear surface 32, the right surface 33, and the left surface 34, and the lower surface 36 opposed to the upper surface 35 and crossing the front surface 31, the rear surface 32, the right surface 33, and the left surface 34. The window 40 for emitting the projection light of the projector 10 to the outside of the housing 30 is provided to at least one of the front surface 31 and the upper surface 35, the wheels 39 are placed at the lower surface 36, the gripper 150 is provided to the upper surface 35, the gripper 150 includes the first support rod 151 coupled to the upper surface 35, the second support rod 152 coupled to the upper surface 35, and the coupling 153 for coupling the first support rod 151 and the second support rod 152 to each other, and the operation panel 155 is provided to the coupling 153.

Accordingly, it is possible for the user to reduce the risk of the erroneous operation when holding the first support rod 151 and the second support rod 152 to move the projection system 1 and the projector cart 20.

In the use state, the length in the vertical direction of a portion above the upper surface 35 of the first support rod 151 is larger than the distance from the upper surface 35 to the lower surface 36 of the housing 30, and the distance from the upper surface 35 of the housing 30 to the operation panel 155 is larger than the distance from the upper surface 35 to the lower surface 36.

Accordingly, since it is possible for the operator to operate the operation panel 155 while keeping the standing posture by using the gripper 150, the operability when housing the projector 10 is improved.

The first support rod 151 has the hollow structure, the circuit controlled by the operation on the operation panel 155 is placed in the hollow structure, and the wiring electrically coupled to the circuit reaches the housing 30 via the hollow structure.

Accordingly, it is possible for the projector cart 20 to operate the projector 10 by wired communication.

The method for installing a projection system 1, which includes the projector 10, the housing 30 for housing the projector 10, the wheels 39 provided to the housing 30, the gripper 150 provided to the housing 30, and the operation panel 155 provided to the gripper 150 and configured to change the electrical state of the projector 10, includes the first step of grasping the gripper 150 to move the wheels 39, the second step of operating, after the first step, the operation panel 155 to turn the power of the projector ON, and the third step of grasping, after the second step, the gripper 150 to adjust the position of the projection system 1.

Accordingly, since it is possible to perform the movement and the operation of the projection system 1 while keeping the standing posture by using the gripper 150, the operability of the projection system 1 and the projector cart 20 is improved.

### Embodiment 2

Embodiment 2 to which the present disclosure is applied will be described. In Embodiment 2, constituents substantially the same as those of Embodiment 1 described above will be denoted by the same reference numerals to omit the descriptions thereof.

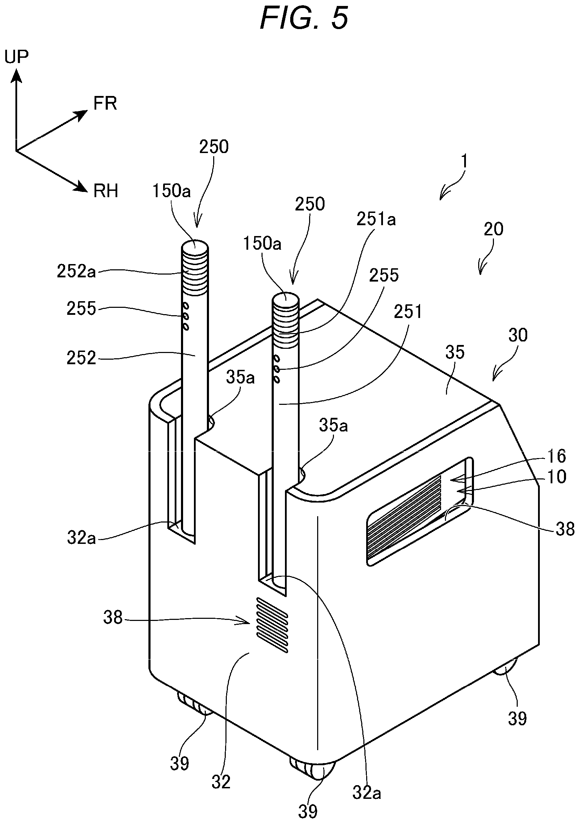

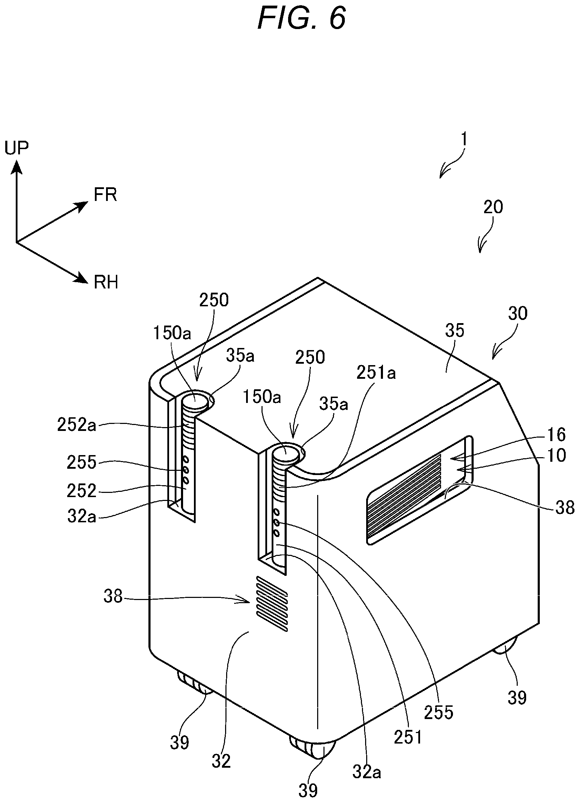

FIG. 5 is a right-rear perspective view of the projection system 1 according to Embodiment 2. FIG. 6 is a right-rear perspective view of the projection system 1 according to Embodiment 2 when grippers 250 are retracted.

In Embodiment 2, the grippers 250 are different in shape from the gripper 150 in Embodiment 1. That is, in Embodiment 1, the gripper 150 includes the first support rod 151, the second support rod 152, and the coupling 153. However, in Embodiment 2, the grippers 250 are composed of a first support rod 251 and a second support rod 252. The first support rod 251 and the second support rod 252 have grip regions 251a, 252a at upper ends thereof. The grip regions 251a, 252a are formed by, for example, providing grips or the like to the support rods 251, 252.

Further, Embodiment 2 is different from Embodiment 1 in the form and arrangement position of the first operator 155. In Embodiment 1, the operation panel 155 is provided to the coupling 153 of the gripper 150. However, in Embodiment 2, push buttons (the first operator) 255 that can be pressed toward the front side of the projector cart 20 are arranged in the rear portions of the first support rod 251 and the second support rod 252. By providing the push buttons 255 in such a manner, it is possible to prevent the first operator 255 from being pressed by the erroneous operation when the user grips the grippers 250 to operate and move the projection system 1.

### Advantages of Embodiment 2

As described hereinabove, according to Embodiment 2 to which the present disclosure is applied, the housing 30 includes the front surface 31, the rear surface 32 opposed to the front surface 31, the right surface 33 crossing the front surface 31 and the rear surface 32, the left surface 34 opposed to the right surface 33 and crossing the front surface 31 and the rear surface 32, the upper surface 35 crossing the front surface 31, the rear surface 32, the right surface 33, and the left surface 34, and the lower surface 36 opposed to the upper surface 35 and crossing the front surface 31, the rear surface 32, the right surface 33, and the left surface 34. The window 40 for emitting the projection light of the projector 10 to the outside of the housing 30 is provided to at least one of the front surface 31 and the upper surface 35, the wheels 39 are placed at the lower surface 36, the gripper 250 is provided to the upper surface 35, and in the use state, the grippers 250 includes the first support rod 251 extending upward, an end of the first support rod 251 is coupled to the upper surface 35, and the push button 255 is placed in a portion of the first support rod 251 facing to the direction from the front surface 31 toward the rear surface 32.

Accordingly, it is possible to prevent the push button 255 from being pressed by the erroneous operation when the user grasps the gripper 250 to move the projection system 1.

### Embodiment 3

Embodiment 3 to which the present disclosure is applied will be described. In Embodiment 3, constituents substantially the same as those of Embodiment 1 described above will be denoted by the same reference numerals to omit the descriptions thereof.

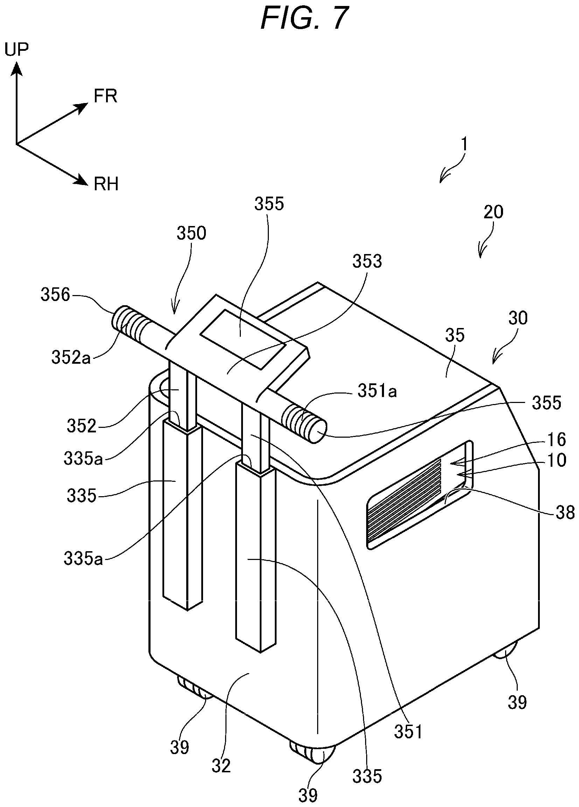

FIG. 7 is a right-rear perspective view of the projection system 1 according to Embodiment 3.

In Embodiment 3, the shape of the projector cart 20 is different. In Embodiment 1, the gripper 150 is retracted by providing the cutouts 32a, 35a. However, in Embodiment 3, a gripper 350 is retracted by providing support rod housings 335 to the rear surface 32 of the projector cart 20. Thus, support rod housing holes 335a are provided to the upper surface 35, and the gripper 350 can be retracted.

Further, in Embodiment 1, the gripper 150 includes the first support rod 151, the second support rod 152, and the coupling 153, and the operation panel 155 is provided to the coupling 153 provided to the gripper 150. In Embodiment 3, the first support rod 351 and the second support rod 352 of the gripper 350 include protrusions 351a, 352a extending from upper end portions of the first support rod 351 and the second support rod 352 outward in a cart width direction of the projector cart 20. The cart width direction means a direction along the reference character RH.

Further, in addition to the operation panel 155 provided to a coupling 353, a push button (the first operator) 355 at the first support rod side and a push button (a second operator) 356 at the second support rod side, which can be pressed from the outside to the inside of the projection system 1, are placed at outer ends of the protrusions 351a, 352a, respectively. In the present embodiment, the first operator 355 performs an operation relating to the power supply of the projector, and the second operator 356 performs an operation relating to the keystone correction.

### Advantages of Embodiment 3

The housing 30 includes the front surface 31, the rear surface 32 opposed to the front surface 31, the right surface 33 crossing the front surface 31 and the rear surface 32, the left surface 34 opposed to the right surface 33 and crossing the front surface 31 and the rear surface 32, the upper surface 35 crossing the front surface 31, the rear surface 32, the right surface 33, and the left surface 34, and the lower surface 36 opposed to the upper surface 35 and crossing the front surface 31, the rear surface 32, the right surface 33, and the left surface 34. The window 40 for emitting the projection light of the projector 10 to the outside of the housing 30 is provided to at least one of the front surface 31 and the upper surface 35, the wheels 39 are placed at the lower surface 36, the gripper 350 is provided to the upper surface 35, the gripper 350 includes the first support rod 351 coupled to the upper surface 35, the second support rod 352 coupled to the upper surface 35, and the coupling 353 for coupling the first support rod 351 and the second support rod 352 to each other, and the push button 355 is placed at an opposite side of the first support rod 351 to the coupling 353.

Accordingly, it is possible to prevent the push button 355 from being pressed by the erroneous operation when the user grasps the gripper 350 to move the projection system 1.

The push button 356 for changing the electrical state of the projector 10 is provided, the push button 356 is placed at an opposite side of the second support rod 352 to the coupling 353, the first operator 355 includes the push button 355 or the operation panel 155 for turning ON or OFF the power of the projector, and the push button 356 causes the projector 10 to execute the keystone correction of an image projected by the projector 10.

Accordingly, the movement of the projection system 1 and the operation of the projector 10 can be performed by using the gripper 350, and the operability of the projection system 1 is improved.

### Other Embodiments

The embodiments described above are merely examples of the present disclosure, and can be modified and applied as appropriate within the scope and spirit of the present disclosure.

In Embodiments 1 to 3, the operation panel 155 provided to the coupling 153, 353, the push button 255 placed in the rear part of the gripper 250, and the push buttons 355, 356 provided on the protrusions 351a, 352a are disclosed. However, the arrangement of the operation panel and the push buttons, that is, the arrangement of the first operator and the second operator, is not limited thereto.

For example, in Embodiment 2, push buttons which can be pressed from the upper ends of the first support rod 251 and the second support rod 252, that is, the upper end portions of the grip regions 251a, 252a, toward the lower side of the projector cart 20 may be provided. Further, the first operator and the second operator may be placed at a plurality of places, and the second operator may be placed at the position of the first operator. Further, the push buttons and the touch panel can appropriately be changed as long as signals related to the operation can be transmitted to the projector.

In Embodiment 1, the electric circuit provided to the operation panel 155 transmits signals to the projector 10 by wired communication. However, a configuration in which the electric circuit transmits radio signals to the projector 10 may be adopted.

In Embodiments 1 to 3, there are disclosed the configuration in which the gripper has an inverted U-shape in the front view with the first support rod, the second support rod, and the coupling, and the configuration in which the gripper is formed of the first support rod and the second support rod. However, the shape of the gripper is not limited thereto. For example, a T-shaped gripper may be formed of a single support rod extending from the housing and a support rod extending in the horizontal direction at an upper end of the single support rod.

### Summary of Present Disclosure

The present disclosure will hereinafter be summarized as supplementary notes.

(Supplementary Note 1) A projection system including a projector, and a projector cart configured to house the projector, in which the projector includes an enclosure, a light source housed in the enclosure, a light modulator housed in the enclosure and configured to modulate light emitted from the light source, a projection lens unit configured to emit the light modulated by the light modulator to an outside of the enclosure, and a power supply substrate housed in the enclosure and configured to supply power to the light source, and in a state in which the projector is in use, the projector cart includes a housing which is configured to house the projector and is configured to emit the light emitted from the projection lens unit to an outside of the projector cart, wheels placed vertically below the housing, and a first operator which is located vertically above the housing and is configured to change an electrical state of the power supply substrate.

Accordingly, since it becomes easy for the operator to operate the projector in the standing posture, the operability of the projection system is improved.

(Supplementary Note 2) The projection system described in Supplementary Note 1, in which the projector cart includes a gripper provided to the housing, the gripper is located above the housing in a vertical direction, and the first operator is provided to the gripper.

Accordingly, it is possible to perform the movement of the projection system and the operation of the projector by using the gripper, and it becomes easy for the operator to operate the projector in the standing posture, and therefore, the operability of the projection system is improved.

(Supplementary Note 3) The projection system described in Supplementary Note 1 or 2, in which the first operator includes a button or an icon configured to turn ON or OFF power of the projector.

Accordingly, since the power supply operation of the projector can be performed by using the gripper, the operability of the projection system is improved.

(Supplementary Note 4) The projection system described in Supplementary Note 1 or 2, in which the first operator includes a button or an icon configured to make the projector execute a keystone correction of an image projected by the projector.

Accordingly, since the keystone correction operation of the projector can be performed by using the gripper, the operability of the projection system is improved.

(Supplementary Note 5) The projection system described in any one of Supplementary Notes 2 to 4, in which, in the state in which the projector is in use, the gripper is placed so that at least a part of the gripper is retracted at a position equivalent to or lower than a surface at a vertically upper side of the housing, and in a state in which the gripper is retracted, the first operator faces outside the housing.

Accordingly, since the user can operate the first operator while retracting the gripper, the operability of the projection system is improved.

(Supplementary Note 6) A projector cart configured to house a projector and move, the projector cart including a housing configured to house the projector, wheels provided to the housing, and a first operator configured to change an electrical state of the projector, in which the first operator is located above the housing in a vertical direction in a use state.

Accordingly, since it becomes easy for the operator to operate the projector in the standing posture, the operability of the projection system is improved.

(Supplementary Note 7) The projector cart described in Supplementary Note 6, further including a gripper provided to the housing, in which, in the use state, the gripper is located above the housing in the vertical direction, and the first operator is provided to the gripper.

Accordingly, the movement of the projection system and the operation of the projector can be performed by using the gripper, and the operability of the projection system is improved.

(Supplementary Note 8) The projector cart described in Supplementary Note 7, in which the housing includes a first surface, a second surface opposed to the first surface, a third surface crossing the first surface and the second surface, a fourth surface opposed to the third surface and crossing the first surface and the second surface, a fifth surface crossing the first surface, the second surface, the third surface, and the fourth surface, and a sixth surface opposed to the fifth surface and crossing the first surface, the second surface, the third surface, and the fourth surface, a window configured to emit projection light of the projector to an outside of the housing is provided to at least one of the first surface and the fifth surface, the wheels are placed at the sixth surface, the gripper is placed at the fifth surface, the gripper includes a first support rod coupled to the fifth surface, a second support rod coupled to the fifth surface, and a coupling configured to couple the first support rod and the second support rod to each other, and the first operator is placed at an opposite side of the first support rod to the coupling.

Accordingly, it is possible to reduce the risk of an erroneous operation when the user grasps the coupling to move the projector cart.

(Supplementary Note 9) The projector cart described in Supplementary Note 7, in which the housing includes a first surface, a second surface opposed to the first surface, a third surface crossing the first surface and the second surface, a fourth surface opposed to the third surface and crossing the first surface and the second surface, a fifth surface crossing the first surface, the second surface, the third surface, and the fourth surface, and a sixth surface opposed to the fifth surface and crossing the first surface, the second surface, the third surface, and the fourth surface, a window configured to emit projection light of the projector to an outside of the housing is provided to at least one of the first surface and the fifth surface, the wheels are placed at the sixth surface, the gripper is placed at the fifth surface, the gripper includes a first support rod coupled to the fifth surface, a second support rod coupled to the fifth surface, and a coupling configured to couple the first support rod and the second support rod to each other, and the first operator is provided to the coupling.

Accordingly, the risk of the erroneous operation when the user grasps the first support rod and the second support rod to move the projector cart is reduced.

(Supplementary Note 10) The projector cart described in Supplementary Note 7, in which the housing includes a first surface, a second surface opposed to the first surface, a third surface crossing the first surface and the second surface, a fourth surface opposed to the third surface and crossing the first surface and the second surface, a fifth surface crossing the first surface, the second surface, the third surface, and the fourth surface, and a sixth surface opposed to the fifth surface and crossing the first surface, the second surface, the third surface, and the fourth surface, a window configured to emit projection light of the projector to an outside of the housing is provided to at least one of the first surface and the fifth surface, the wheels are placed at the sixth surface, the gripper is placed at the fifth surface, and in the use state, the gripper includes a first support rod extending upward, one end of the first support rod is coupled to the fifth surface, and the first operator is placed in a portion of the first support rod facing to a direction from the first surface toward the second surface.

Accordingly, the risk of the erroneous operation when the user moves the projector cart is reduced.

(Supplementary Note 11) The projector cart described in any one of Supplementary Notes 6 to 10, in which the first operator includes a button or an icon configured to turn ON or OFF power of the projector.

Accordingly, since the power supply operation of the projector can be performed by using the gripper, the operability of the projection system is improved.

(Supplementary Note 12) The projector cart described in any one of Supplementary Notes 6 to 10, in which the first operator includes a button or an icon configured to make the projector execute a keystone correction of an image projected by the projector.

Accordingly, since the keystone correction operation of the projector can be performed by using the gripper, the operability of the projection system is improved.

(Supplementary Note 13) The projector cart according to any one of Supplementary Notes 8 to 12, further including a second operator configured to change an electrical state of the projector, in which the second operator is placed at an opposite side of the second support rod to the coupling, the first operator includes a button or an icon configured to turn ON or OFF power of the projector, and the second operator includes a button or an icon configured to make the projector execute a keystone correction of the image projected by the projector.

Accordingly, the movement of the projection system and the operation of the projector can be performed using the gripper, and the operability of the projection system is improved.

(Supplementary Note 14) The projector cart described in any one of Supplementary Notes 7 to 13, in which, in the use state, the gripper is disposed so that at least a part of the gripper is retracted at a position equivalent to or lower than a surface at a vertically upper side of the housing, and in a state in which the gripper is retracted, the first operator faces outside the housing.

Accordingly, since the user can operate the first operator while retracting the gripper, the operability of the projection system is improved.

(Supplementary Note 15) The projector cart described in any one of Supplementary Notes 8 to 14, in which, in the use state, a length in a vertical direction of a portion of the first support rod above the fifth surface is longer than a distance from the fifth surface to the sixth surface of the housing, and a distance from the fifth surface to the first operator is longer than the distance from the fifth surface to the sixth surface of the housing.

Accordingly, since it is possible for the operator to operate the first operator while keeping the standing posture by using the gripper, the operability when housing the projector is improved.

(Supplementary Note 16) The projector cart according to any one of Supplementary Notes 8 to 15, in which the first support rod has a hollow structure, a circuit controlled by an operation of the first operator is placed in the hollow structure, and a wiring line electrically coupled to the circuit reaches the housing via the hollow structure.

Accordingly, the projector cart can operate the projector by wired communication.

(Supplementary Note 17) The projector cart according to any one of Supplementary Notes 8 to 15, in which the first operator includes an electric circuit, and the electric circuit is configured to transmit a radio signal to the projector in accordance with an operation of the first operator.

Accordingly, the projector cart can operate the projector wirelessly.

(Supplementary Note 18) A method for installing a projection system including a projector, a housing configured to house the projector, wheels provided to the housing, a gripper provided to the housing, and an operator provided to the gripper and configured to change an electrical state of the projector, the method including grasping the gripper to move the wheels, turning ON power of the projector by operating the operator after moving the wheel, and adjusting a position of the projection system by grasping the gripper after turning ON the power.

Accordingly, since it is possible for the operator to perform the movement and the operation of the projection system while keeping the standing posture by using the gripper, the operability of the projection system is improved.

## Claims

1. A projection system comprising:
a projector; and
a projector cart configured to house the projector, wherein
the projector includes an enclosure, a light source housed in the enclosure, a light modulator housed in the enclosure and configured to modulate light emitted from the light source, a projection lens unit configured to emit the light modulated by the light modulator to an outside of the enclosure, and a power supply substrate housed in the enclosure and configured to supply power to the light source, and
in a state in which the projector is in use, the projector cart includes a housing which is configured to house the projector and is configured to emit the light emitted from the projection lens unit to an outside of the projector cart, wheels disposed vertically below the housing, and a first operator which is located vertically above the housing and is configured to change an electrical state of the power supply substrate.

2. The projection system according to claim 1, wherein
the projector cart includes a gripper provided to the housing, the gripper is located above the housing in a vertical direction, and
the first operator is provided to the gripper.

3. The projection system according to claim 1 or 2, wherein
the first operator includes a button or an icon configured to turn ON or OFF power of the projector.

4. The projection system according to claim 1 or 2, wherein
the first operator includes a button or an icon configured to make the projector execute a keystone correction of an image projected by the projector.

5. The projection system according to any one of claims 2 to 4, wherein
in the state in which the projector is in use, the gripper is placed so that at least a part of the gripper is retracted at a position equivalent to or lower than a surface at a vertically upper side of the housing, and
in a state in which the gripper is retracted, the first operator faces outside the housing.

6. A projector cart configured to house a projector and move, the projector cart comprising:
a housing configured to house the projector;
wheels provided to the housing; and
a first operator configured to change an electrical state of the projector, wherein
the first operator is located above the housing in a vertical direction in a use state.

7. The projector cart according to claim 6, further comprising:
a gripper provided to the housing, wherein
in the use state, the gripper is located above the housing in the vertical direction, and
the first operator is provided to the gripper.

8. The projector cart according to claim 7, wherein
the housing includes a first surface, a second surface opposed to the first surface, a third surface crossing the first surface and the second surface, a fourth surface opposed to the third surface and crossing the first surface and the second surface, a fifth surface crossing the first surface, the second surface, the third surface, and the fourth surface, and a sixth surface opposed to the fifth surface and crossing the first surface, the second surface, the third surface, and the fourth surface,
a window configured to emit projection light of the projector to an outside of the housing is provided to at least one of the first surface and the fifth surface,
the wheels are placed at the sixth surface,
the gripper is placed at the fifth surface,
the gripper includes a first support rod coupled to the fifth surface, a second support rod coupled to the fifth surface, and a coupling configured to couple the first support rod and the second support rod to each other, and
the first operator is disposed at an opposite side of the first support rod to the coupling.

9. The projector cart according to claim 7, wherein
the housing includes a first surface, a second surface opposed to the first surface, a third surface crossing the first surface and the second surface, a fourth surface opposed to the third surface and crossing the first surface and the second surface, a fifth surface crossing the first surface, the second surface, the third surface, and the fourth surface, and a sixth surface opposed to the fifth surface and crossing the first surface, the second surface, the third surface, and the fourth surface,
a window configured to emit projection light of the projector to an outside of the housing is provided to at least one of the first surface and the fifth surface,
the wheels are placed at the sixth surface,
the gripper is placed at the fifth surface, the gripper includes a first support rod coupled to the fifth surface, a second support rod coupled to the fifth surface, and a coupling configured to couple the first support rod and the second support rod to each other, and
the first operator is provided to the coupling.

10. The projector cart according to claim 7, wherein
the housing includes a first surface, a second surface opposed to the first surface, a third surface crossing the first surface and the second surface, a fourth surface opposed to the third surface and crossing the first surface and the second surface, a fifth surface crossing the first surface, the second surface, the third surface, and the fourth surface, and a sixth surface opposed to the fifth surface and crossing the first surface, the second surface, the third surface, and the fourth surface,
a window configured to emit projection light of the projector to an outside of the housing is provided to at least one of the first surface and the fifth surface,
the wheels are placed at the sixth surface,
the gripper is placed at the fifth surface,
in the use state, the gripper includes a first support rod extending upward, one end of the first support rod is coupled to the fifth surface, and
the first operator is placed in a portion of the first support rod facing a direction from the first surface toward the second surface.

11. The projector cart according to any one of claims 6 to 10, wherein
the first operator includes a button or an icon configured to turn ON or OFF power of the projector.

12. The projector cart according to any one of claims 6 to 10, wherein
the first operator includes a button or an icon configured to make the projector execute a keystone correction of an image projected by the projector.

13. The projector cart according to any one of claims 8 to 12, further comprising:
a second operator configured to change an electrical state of the projector, wherein
the second operator is placed at an opposite side of the second support rod to the coupling,
the first operator includes a button or an icon configured to turn ON or OFF power of the projector, and
the second operator includes a button or an icon configured to make the projector execute a keystone correction of the image projected by the projector.

14. The projector cart according to any one of claims 7 to 13, wherein
in the use state,
the gripper is placed so that at least a part of the gripper is retracted at a position equivalent to or lower than a surface at a vertically upper side of the housing, and
in a state in which the gripper is retracted, the first operator faces outside the housing.

15. The projector cart according to any one of claims 8 to 14, wherein
in the use state,
a length in a vertical direction of a portion of the first support rod above the fifth surface is longer than a distance from the fifth surface to the sixth surface of the housing, and a distance from the fifth surface to the first operator is longer than the distance from the fifth surface to the sixth surface of the housing.

16. The projector cart according to any one of claims 8 to 15, wherein
the first support rod has a hollow structure,
a circuit controlled by an operation of the first operator is placed in the hollow structure, and
a wiring line electrically coupled to the circuit reaches the housing via the hollow structure.

17. The projector cart according to any one of claims 8 to 15, wherein
the first operator includes an electric circuit, and
the electric circuit is configured to transmit a radio signal to the projector in accordance with an operation of the first operator.

18. A method for installing a projection system including a projector, a housing configured to house the projector, wheels provided to the housing, a gripper provided to the housing, and an operator provided to the gripper and configured to change an electrical state of the projector,
the method comprising:
grasping the gripper to move the wheels;
turning ON power of the projector by operating the operator after moving the wheel; and
adjusting a position of the projection system by grasping the gripper after turning ON the power.
